# EUROPEAN PATENT SPECIFICATION

(11) **EP 0 526 055 B1**
(45) Date of publication and mention of the grant of the patent: **18.06.1997**
(21) Application number: 92306548.6
(22) Date of filing: 16.07.1992
(51) Int. Cl.: G06F 11/00

(54) **Monitoring execution of a computer program to provide profile analysis**
Überwachung der Ausführung eines Rechnerprogramms zwecks Profilanalyse
Surveillance de l'exécution d'un programme d'ordinateur afin de fournir une analyse de profil

(30) Priority: 26.07.1991 GB 9116162
(43) Date of publication of application: 03.02.1993
(73) Proprietor: RESEARCH MACHINES PLC, Milton, Abingdon, Oxon OX14 4SE (GB)
(72) Inventor: Burton-Cundall, Brian David, Oxford, OX4 3EG (GB)
(74) Representative: Unwin, Stephen Geoffrey

(56) References cited:
- US-A- 3 427 443
- IBM TECHNICAL DISCLOSURE BULLETIN. vol. 15, no. 1, June 1972, NEW YORK US page 92 D. B. GASICH ET AL. 'Measuring frequency of entering a control section'

## Description

The present invention relates to a computer system for monitoring execution of a computer program to provide profile analysis thereof.

Any general purpose computer system requires a variety of software to enable it to perform the desired tasks. The desired functions of such systems are continually increasing, and this means that new items of software are continually being written and existing items updated.

A typical commercial program is fairly elaborate. Although its general function may often be expressed very briefly (e.g. a word processor or a spreadsheet), the number of detailed features which it provides is extremely large, and the number of options which it provides is similarly large. The task of writing such a program is a lengthy and intellectually demanding one, requiring consideration of several levels of detail, from the top level of simply naming the type of program (e.g. word processing), through various levels such as choosing the main options (e.g. Spell checker, and if so, integral or an option? Print control? Footnote facility?) down through more detailed matters (e.g. How and when should text be relayed when changes are made in existing text? What non-standard characters should be provided, and how? What about accents?) to the level of individual lines of source code.

Most software is used by users who have neither the time nor the ability to analyse the program in detail. Although users accept that they will probably have to expend considerable time and effort learning to use the program effectively, they expect the program to perform according to its specification; it must do what the accompanying documentation (primarily, the instruction manual) says it does with a high degree of reliability.

It is unfortunately well established that errors are likely to occur in the writing of a program. There is a wide variety of types of errors, arising from a wide variety of causes. There can be high-level basic omissions or faulty implementations of major functions. Writing two sections of the program with one depending on (or supplying data to) the other and then amending one of the two sections without correspondingly amending the other can produce intermediate-level faults; and low-level errors can arise from using two different names for the same variable at different places, or using the same name for two different variables in different sections of the program. (There are also, of course, many other causes of errors.)

It is therefore necessary to test a program fairly rigorously before releasing it commercially. However, the time taken in testing and its cost must be kept within reasonable bounds, otherwise the useful life of the program may approach expiry before it is released and its cost may become excessive.

Such testing can generally be divided into three stages: component testing, integration testing, and confidence testing. Most programs of substantial size are developed as a set of components which are then combined to form the complete program. Component testing is the testing of the individual components, and integration testing is the testing of whether the combined components perform together correctly - i.e. whether their interfacing is correct. Following that, confidence testing checks whether the program as a whole performs the required functions. (Obviously, components can be made up of subcomponents, and the testing procedure will then be correspondingly nested.)

In addition to the need for high reliability, with many pieces of software it is also important that the speed shall be as high as possible. A typical program is fairly elaborate, and will contain a large number of conditional routines. Although the usage of the various routines will depend on the precise combination of input conditions and data used on any particular run, the relative usages of the various routines will generally be reasonably constant. The usages of some routines will be high, while other routines which deal with rarely occurring conditions will have very low usages.

With many programs, it is important to maximize the speed at which they run. However, there will usually be a trade-off between the simplicity and convenience of writing the program and the speed at which it runs. Improving the speed at which a particular routine runs will in general involve a considerable programming effort and will often increase the complexity of the program for that routine.

It is therefore desirable, when tuning or refining a program to improve its speed, to concentrate on those routines which have high usage. The detailed structure of the program, and in particular the various branch points, will generally have only a very rough correspondence with the nature of the test input conditions and data. It is clearly desirable to determine which routines to concentrate on optimizing to achieve the best improvement of the speed of the program as a whole for a given amount of effort. To do this, it is necessary to run the program with typical sets of test input conditions and data and to monitor the relative usages of the various routines. Such monitoring is known as profile analysis; that is, the generation of a profile of the usages of various different routines of the program.

There are various possible ways of performing profile analysis. Additional temporary test code can be inserted in each branch to be profiled, so that a record can be kept of the usage of those branches. This has several drawbacks. The insertion of the profiling code is error prone; the monitoring procedure may also be subject to errors; the inserted profiling code may interact with the original code to produce errors (or suppress them); and the program may overflow the available space when the profiling code is inserted. Further, the extra profiling code slows down the execution of the program, and timing related errors may be introduced (or suppressed).

If the profiling code is left in the program permanently, this will considerably increase the size of the program, and its running speed will be considerably reduced.

It is also possible to connect a hardware profile analyser to the system which will run the program being tested, to track and record the execution of the program in real time. To avoid the problem of the profiling itself changing timing related errors, the profile analyser has to run faster than the system running the program being profiled. This means that a hardware profile analyser is expensive.

IBM Technical Disclosure Bulletin, vol. 15, no. 1, June 1972, page 92, Gasich et. al. : "Measuring frequency of entering a control section" discloses replacing an opcode of an instruction to cause an operation exception. US-A-3 427 443 discloses setting a test bit when particular program words are executed and running an analysing program afterwards.

According to a first aspect of the present invention, there is provided a computer system for monitoring the execution of a computer program to provide profile analysis thereof, the system comprising: a memory; processing means for running a program stored in the memory; clock timer means; interrupt means responsive to predetermined words of a program stored in the memory in which a predetermined bit position (test bit) is in a predetermined (set) state and arranged to interrupt running of the program when such a word is executed; and recording means for recording each occurrence of a word causing an interrupt and the contents of the clock timer means at the time of the interrupt and thereby recording a usage and time record of the said words, the predetermined bit position being an additional or spare bit position of the program word.

According to a second aspect of the invention, there is provided a method of monitoring execution of a computer program to provide profile analysis thereof, the method comprising: storing the program in a memory; running the program; detecting the execution of words of the program in which a predetermined bit position (test bit) is in a predetermined (set) state and thereupon interrupting the running of the program; and recording each occurrence of the words causing an interrupt together with the time of the interrupt, the predetermined bit position being an additional or spare bit position of the program word.

It should be noted that the term execute is used in this specification to refer to any part of a fetch/execute cycle of a program word.

Preferred features of the invention will be apparent from the following description and from the subsidiary claims of the specification.

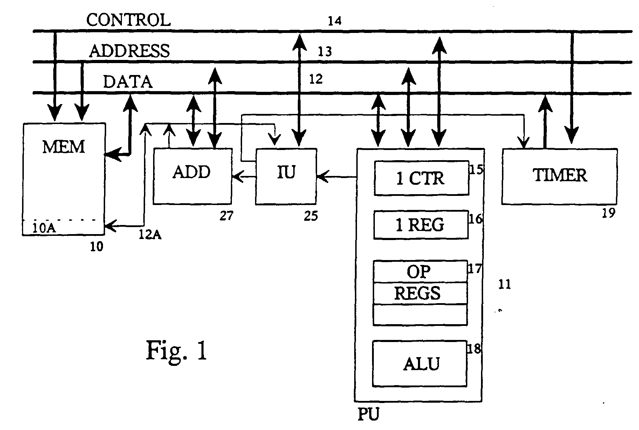

The invention will now be further described, merely by way of example, with reference to the accompanying drawing which shows a schematic diagram of a computer system according to an embodiment of the invention.

Before this embodiment is described in detail, the manner in which profile analysis is carried out will first be discussed.

Any particular program to be tested will be designed to run on a computer having particular characteristics (of which the instruction set and the word length are of major importance). The program and a computer on which it is intended to run together form a computer system, and we are concerned primarily with systems in which the computer is of the personal computer type, although it will be realized that this is not an essential limitation.

The profile analyser system comprises a computer which is compatible with the computer on which the program is designed to run (and may be exactly the same type of computer), with some minor modifications (which are discussed further below). The program to be tested is run on the profile analyser computer together with the appropriate additional software to perform the profile analysis.

In operation, the program to be tested is processed by the profile analyser, using suitable sets of test input conditions and data. This processing of the program involves running it in essentially the way in which it would normally run but involves further functions exclusive to the profile analyser, as a result of which the profile analyser determines the usage profile of the program resulting from the sets of test input conditions and data.

The basic principle of the profile analyser is that instructions of the program which have been executed and their time of execution are recorded. There are two aspects of this which require more detailed discussion: which instructions are recorded, and how they are recorded.

It is convenient to consider first how the recording is achieved. The instructions to be recorded are identified by their memory addresses. There is only one useful way of recording addresses; that is recording the memory addresses as the corresponding instructions are executed. The resulting list of memory addresses can then be sorted and the number of times each address occurs counted. The time at which each instruction is executed is also recorded with its address, so that the actual times taken to execute the various routines can also be determined from the recorded addresses and times to provide a time and usage record of the instructions executed.

The question of which instructions are recorded remains to be considered. For this, recording all instructions will result in a grossly excessive amount of information being recorded, and an excessive burden in analysing the results. In practice, therefore, the option of recording only some instructions has to be adopted. To do this, it is necessary to give those instructions which are to be recorded some distinguishing characteristic. To this end, an additional bit (a test bit) is included in the instructions, so that the fact that an instruction has been executed can be recorded in the instruction itself. The details of how this can be achieved are discussed below. The profile analyser thus requires a word size 1 bit larger than would otherwise be required by the program being tested.

The preferred form of the profile analyser therefore includes in the program, in the form in which it is processed by the profile analyser, a test bit (as described above) which is not used when the program is normally run, interrupt means responsive to the test bit in an instruction, and means responsive thereto for recording the address containing that instruction and the time the instruction is executed.

Unless otherwise stated, it will be assumed from here on that the profile analyser is of the preferred form just described.

For the profile analyser to operate, the instructions of the program have to include a test bit which is reserved for the use of the profile analyser.

All instructions of the program are thus effectively 1 bit wider when it is being processed by the profile monitor compared to when it is operated normally.

It may be that the standard format for instructions in the system includes one or more bits which are not normally used. If this is so, then one of these unused bits can be utilized by the profile system. It may also be that the standard format includes a parity bit, and that bit can be used for the present purposes (in which case the profile analyser system will not then check the parity of the program).

The profile analyser system initializes the program by setting the test bit in the instructions to 1, for example, which is called the 'set' state.

There are two basic strategies for performing the initialization of the program to be tested.

The first strategy is to set the test bit to 1 throughout the program, or complete blocks of it. This is very simple to do. However, this strategy has the disadvantage that the test bit will be set in operands as well as instructions. If the program is constructed in such a way that each possible branch consists of a reasonably long sequence of instructions (possibly intermixed with data) forming a block which is largely separate from any other block, then the blocks which have been exercised in the processed program will generally be identifiable. However, the boundaries of the blocks may not generally be precisely identifiable, in which case it will be difficult to distinguish blocks (program branches) which have not been executed from stretches of pure operands. If the program has a number of short branches, then it will be difficult to determine the significance of the results of processing it without lengthy analysis of the program. For these reasons, this strategy is highly undesirable for profile analysis.

The second initialization strategy is to set the test bit for only selected words in the program. This can be achieved relatively simply by using an enhanced compiler when compiling the program from a high level language into machine code. Output can be taken from the compilation and build process such as map or object files and used to set the test bit of selected instructions.

In its simplest form, this involves setting the test bit to 1 for all instructions but for no other words (operands). In a more elaborate form, test bits can be generated only on instructions or operands defined, say, by PUBLIC labels.

Another but more complex way of setting test points is to analyse the program (using another piece of software) to generate a list of test points which covers all execution paths.

It is desirable to set the test bit in an instruction at the beginning of each routine to be included in the profile analysis. It may also be desirable to set the test bit in an instruction at the end of each such routine, so that the time taken to execute the routine can readily be determined. (A "routine" here may be a fairly large piece of the program, including a number of (conditional) branches, so that the time taken to execute it may be variable.)

As noted above, the processing of the program by the profile analyser system involves running it, in essentially the way in which it would normally run but performing some additional functions to carry out the profile analysis but with the overhead of the profile analyser interrupting execution when a word with a set test bit is executed.

The profile analyser includes interrupt means responsive to the reserved bit position in an instruction and means responsive thereto for recording the address containing that instruction and the time of execution of the instruction.

The profile analyser system described herein enables profile analysis to be carried out automatically without unduly affecting system performance. This is achieved by the provision of hardware to monitor the test bit of instructions as they are executed in parallel with the processing of the respective instruction and for recording the execution of those instructions in which the test bit is set together with their time of execution.

As shown in the Figure, the profile analyser system comprises two main units, a memory 10 and a processing unit 11, coupled together by a data bus 12, an address bus 13, and a control bus 14. (In practice, there will also be various other units, not relevant for present purposes and not shown.) The processing unit 11 includes a variety of sub-units, including an instruction counter 15, an instruction register 16, a set of operand registers 17, and an arithmetic and logic unit (ALU) 18. In addition to the two main units 10 and 11, there is also a clock or timer unit 19, coupled to the data bus 12, which is a continuously running clock generating a system time signal.

The operation of this system is briefly as follows. The contents of the instruction counter 15 are sent, as an address, over the address bus 13 to the memory 10, to extract an instruction which is passed back over the data bus 12 to the instruction register 16. The contents of this register are decoded by the processing unit 11, and control its operation, e.g. the processing of the contents of the operand registers 17 by means of the ALU 18. In addition, the instruction in register 16 may call for the reading of an operand from the memory 10 or the writing of an operand into it. For this, the operand's address (which may for example be included in the instruction) is sent to the memory 10 via the address bus 13, and the operand is sent to or received from the memory 10 over the data bus 12. The memory 10 is controlled by signals sent from the processing unit 11 via the control bus 14.

As so far described, this corresponds to a conventional computer system.

In the profile analysis system, the memory width is effectively extended by 1 bit, as represented by an additional memory section 10A. This additional bit is used as the test bit in the program words. In addition, the system is provided with an interrupter unit 25 an address latch 27 and a timer 19 (if this is not already available) and the width of the data bus 12 is effectively extended by an additional 1 bit as represented by path 12A. This feeds the interrupt unit 25, which is also fed with control signals from the control bus 14 and directly from the processing unit 11. The program to be tested is loaded in the memory 10, along with the profile analyser software and this effectively acts, for the operations we are currently considering, as an operating system which sets the profile analyser system up to process the program to be tested.

The interrupter unit 25 is arranged to detect when the test bit is set in a program instruction being processed by the profile analyser system. The interrupt unit 25 knows, from various control signals fed to it, when an instruction is present on the data bus 12, and it therefore checks the state of the test bit at the appropriate time. (It is obviously not necessary to feed it with the rest of the instruction.)

When the interrupt unit 25 detects a test bit that is set, the address of the respective instruction is recorded in the address latch 27 and a non-maskable interrupt (NMI) is generated. Checking means then checks that the interrupt was generated by the coverage analyser system. This can be done by providing a register (which may be the address latch 27) which contains the address of the relevant instruction when this is the source of the interrupt but which has some other known value (e.g. all 0's or all 1's) when an NMI is generated by some other part of the system. Alternatively, a separate bit (e.g. provided in programmable hardware) can be set to indicate that the NMI was caused by the coverage analyser system. The address held in the address latch 27 is then examined and the address and the contents of the clock timer 19 are recorded in memory. The program being tested is then re-started from the point where it was stopped by the interrupt.

Thus, when an interrupt occurs, the system checkes that the interrupt was generated by the profile analyser and if it was the interrupt unit 26 causes the address of the instruction or operand causing the interrupt and its time of occurrence to be recorded in the memory 10.

This is achieved by causing two writes to memory 10. For the first write, the contents of the address latch 27 are placed on the data bus 12 for writing into memory 10, and for the second write, the contents of the timer 20 (which are the current time) are placed on the data bus 12.

Once the appropriate information has been recorded, processing of the program by the processing unit 11 is resumed.

The interrupt servicing for the profile analysis record function can be performed by a stored subroutine forming part of the profile analyser program, but it is preferable to provide additional circuitry, such as the interrupt unit 25 and the address latch 27, in the profile analyser system for for this purpose.

When the profile analyser system runs the program, addresses and instructions will be passing between the main memory containing the program and the processing unit 11. The processing unit 11 of the profile analyser system matches that of the type of computer on which the program is designed to run, and when the profile analyser is processing the program, there will be a corresponding passage or flow of program addresses and instructions between the main memory 10 and the processing unit 11 of the profile analyser.

The address latch 27 latches the address of an instruction or operand causing an interrupt. Since this is done in parallel with the processing of the respective instruction or operand, there is no loss in speed in the processing until an interrupt occurs and, when an interrupt occurs, the address is available in the address latch 27 for recording in the memory 10.

In order for the processing unit 11 to obtain an instruction, it obviously has to contain the address of the instruction (in its instruction counter 15). Once the instruction has been fetched from memory 10, the processing unit 11 will also contain the instruction itself (in its instruction register 16). In some types of computer, it may be possible for the address of the instruction or operand causing an interrupt to be extracted from the processing unit 11. If that is so, then it is not necessary to provide a separate address latch. Similarly, the processing unit 11 may include control circuitry capable of performing the interrupt detection, in which case it is not necessary to provide a separate interrupt unit 25.

In many computers, there are only two buses between the memory 10 and the processing unit 11; a control bus 14, and an information bus (not shown) for data words (instructions and operands) and addresses. Thus operands, instructions, and addresses all flow over the same bus (at different times). In such computers, the nature of the information passing along the information bus is determined by what signals are present on the control bus 14. In such a case, the address latch 27 will be connected in parallel to the information bus.

The speed at which the profile analyser system processes the program will match the speed at which the program normally runs as long as the test bit is clear in the data words being processed by the profile analyser system. However, that speed will fall as soon as data words with their test bit set are reached. There is therefore a very small possibility of timing related errors in the program not being detected (or being falsely detected).

However, the number of instructions with their test bit set for profile analysis is likely to be modest, so the chance of a timing related problem occurring is correspondingly small. Also, coverage analysis (see co-pending application No EP-A-92 306 547, publication No EP-B-0 526 054) of the program during testing for errors will usually have been performed before profile analysis for speed optimization is performed. Most errors in the program will therefore have already been detected and corrected. Errors occurring during profile analysis can therefore be identified with reasonable certainty as timing errors introduced by the process of profile analysis, and suitable corrective action taken.

The profile analyser system described above provides a software developer with means for identifying which routines of a program are executed most frequently and the length of time taken to execute each routine thereby enabling him to identify which routines are most significant in determining the speed of the program. He can then concentrate his efforts on those routines to improve the overall speed of operation of the program.

The profile analyser system is particularly suitable fo use with personal computers and is able to provide features normally only available on much more expensive hardware profile analyser systems.

## Claims

1. A computer system for monitoring the execution of a computer program to provide profile analysis thereof, the system comprising: a memory (10); processing means (11) for running a program stored in the memory (10); clock timer means (19); interrupt means (25) responsive to predetermined words of a program stored in the memory (10) in which a predetermined bit position (test bit) is in a predetermined (set) state and arranged to interrupt running of the program when such a word is executed; and recording means (10) for recording each occurrence of a word causing an interrupt and the contents of the clock timer (19) means at the time of the interrupt and thereby recording a usage and time record of the said words, the predetermined bit position being an additional or spare bit position of the program word.

2. A computer system according to Claim 1 including initializing means, for setting the test bit positions in at least some of the program words to the predetermined state prior to running the program.

3. A computer system according to Claim 2 wherein the initializing means is arranged to set the test bit in all program words.

4. A computer system according to Claim 2 wherein the initializing means is arranged to set the test bit only in program instructions.

5. A computer system according to any preceding claim wherein the memory (10) has a word length of n+1 bits (n being an integer) and the processing unit (11) a width of n bits for running programs stored in the memory (10), the interrupt means (25) being responsive to the (n+1)th bit of words read from the memory (10).

6. A computer system according to any preceding claim wherein the interrupt means (11) comprises an address latch (27) which latches the address of the current word being executed when an interrupt occurs.

7. A computer system according to Claim 6 including chocking means for checking whether an interrupt was caused by execution of a word in which the test bit was in the set state.

8. A method of monitoring execution of a computer program to provide profile analysis thereof, the method comprising: storing the program in a memory (10); running the program; detecting the execution of words of the program in which a predetermined bit position (test bit) is in a predetermined (set) state and thereupon interrupting the running of the program; and recording each occurrence of the words causing an interrupt together with the time of the interrupt, the predetermined bit position being an additional or spare bit position of the program word.

## Patentansprüche

1. Computersystem zur Überwachung der Ausführung eines Computerprogramms, um eine Profilanalyse davon anzufertigen, wobei das System folgendes umfaßt: einen Speicher (10), ein Verarbeitungsmittel (11) zum Abarbeiten eines in dem Speicher (10) gespeicherten Programms; ein Taktschaltmittel (19); ein Unterbrechungsmittel (25), das auf vorbestimmte Worte eines Programms reagiert, das in dem Speicher (10) gespeichert ist, in dem sich eine vorbestimmte Bitposition (Prüfbit) in einem vorbestimmten (gesetzten) Zustand befindet und die Aufgabe hat, die Abarbeitung des Programms zu unterbrechen, wenn ein solches Wort ausgeführt wird; und ein Aufzeichnungsmittel (10) zum Aufzeichnen jedes Auftretens eines eine Unterbrechung verursachenden Wortes sowie des Inhalts des Taktschaltmittels (19) zum Zeitpunkt der Unterbrechung, so daß ein Datensatz über Gebrauch und Gebrauchszeitpunkt der genannten Wörter aufgezeichnet wird, wobei die vorbestimmte Bitposition eine Zusatz- oder Reserve-Bitposition des Programmwortes ist.

2. Computersystem nach Anspruch 1, umfassend ein Initialisierungsmittel, um die Prüfbitpositionen in wenigstens einigen der Programmwörter vor dem Abarbeiten des Programms in den vorbestimmten Zustand zu setzen.

3. Computersystem nach Anspruch 2, bei dem das Initialisierungsmittel die Aufgabe hat, das Prüfbit in allen Programmwörtern zu setzen.

4. Computersystem nach Anspruch 2, bei dem das Initialisierungsmittel die Aufgabe hat, das Prüfbit nur in Programmanweisungen zu setzen.

5. Computersystem nach einem der vorherigen Ansprüche, bei dem der Speicher (10) eine Wortlänge von n+1 Bits (wobei n eine ganze Zahl ist) und die Verarbeitungseinheit (11) eine Breite von n Bits zum Abarbeiten von in dem Speicher (10) gespeicherten Programmen hat, wobei das Unterbrechungsmittel (25) auf das (n+1)ste Bit von Wörtern reagiert, die von dem Speicher (10) gelesen werden.

6. Computersystem nach einem der vorherigen Ansprüche, bei dem das Unterbrechungsmittel (11) einen Adressenspeicher (27) umfaßt, der bei Auftreten einer Unterbrechung die Adresse des aktuellen ausgeführten Wortes speichert.

7. Computersystem nach Anspruch 6, umfassend ein Prüfmittel zum Prüfen, ob eine Unterbrechung durch Ausführen eines Wortes verursacht wurde, in dem sich das Prüfbit in dem gesetzten Zustand befand.

8. Verfahren zur Überwachung der Ausführung eines Computerprogramms, um eine Profilanalyse davon anzufertigen, wobei das Verfahren folgendes umfaßt: Speichern des Programms in einem Speicher (10); Abarbeiten des Programms; Erfassen der Ausführung von Wörtern des Programms, in dem sich eine vorbestimmte Bitposition (Prüfbit) in einem vorbestimmten (gesetzten) Zustand befindet und darauf die Abarbeitung des Programms unterbricht; und Aufzeichnen jedes Auftretens der eine Unterbrechung verursachenden Wörter zusammen mit dem Zeitpunkt der Unterbrechung, wobei die vorbestimmte Bitposition eine Zusatz- oder Reserve-Bitposition des Programmwortes ist.

## Revendications

1. Système informatique pour contrôler l'exécution d'un programme informatique afin de fournir une analyse de profil de celui-ci, le système comprenant : une mémoire (10) ; un moyen de traitement (11) pour exécuter un programme enregistré dans la mémoire (10); un moyen d'horloge (19); un moyen d'interruption (25) répondant à des mots prédéterminés d'un programme enregistré dans la mémoire (10) dans lesquels une position de bit prédéterminée (bit de contrôle) est dans un état prédéterminé (mis à un) et agencée pour interrompre le déroulement du programme lorsqu'un tel mot est exécuté; et un moyen d'enregistrement (10) pour enregistrer chaque occurrence d'un mot causant une interruption et le contenu du moyen d'horloge (19) au moment de l'interruption et enregistrer ainsi un rapport de l'usage et du moment d'utilisation desdits mots, la position de bit prédéterminée étant une position de bit supplémentaire ou libre du mot du programme.

2. Système informatique selon la Revendication 1 comprenant un moyen d'initialisation, pour mettre les positions de bits de contrôle dans au moins certains des mots du programme à l'état prédéterminé avant le déroulement du programme.

3. Système informatique selon la Revendication 2 dans lequel le moyen d'initialisation est agencé pour mettre le bit de contrôle à un dans tous les mots du programme.

4. Système informatique selon la Revendication 2, dans lequel le moyen d'initialisation est agencé pour ne mettre le bit de contrôle à un que dans les instructions du programme.

5. Système informatique selon l'une quelconque des revendications précédentes dans lequel la mémoire (10) a une longueur de mot de n+1 bits (n étant un nombre entier) et l'unité de traitement (11) une largeur de n bits pour exécuter les programmes enregistrés dans la mémoire (10), le moyen d'interruption (25) répondant au (n+1)ème bit des mots extraits de la mémoire (10).

6. Système informatique selon l'une quelconque des revendications précédentes dans lequel le moyen d'interruption (11) comprend un verrou d'adresse (27) qui verrouille l'adresse du mot en cours d'exécution lorsqu'une interruption se produit.

7. Système informatique selon la Revendication 6 comprenant un moyen de vérification pour vérifier si une interruption a été causée par l'exécution d'un mot dans lequel le bit de contrôle était à l'état un.

8. Méthode d'exécution du contrôle d'un programme informatique pour fournir une analyse de profil de celui-ci, la méthode comprenant : l'enregistrement du programme dans une mémoire (10) ; le déroulement du programme; la détection de l'exécution de mots du programme dans lesquels une position de bit prédéterminée (bit de contrôle) est dans un état prédéterminé (mis à un) et l'interruption à ce moment-là du déroulement du programme; et l'enregistrement de chaque occurrence des mots causant une interruption ainsi que du moment de l'interruption, la position de bit prédéterminée étant une position de bit supplémentaire ou libre du mot du programme.
